# EUROPEAN PATENT SPECIFICATION

(11) **EP 4 465 757 B1**
(45) Date of publication and mention of the grant of the patent: **12.03.2025**
(21) Application number: 23174129.9
(22) Date of filing: 17.05.2023
(51) Int. Cl.: H04W 76/28, H04W 52/02

(54) **METHOD FOR OPERATING A RADIO ACCESS NETWORK OF A MOBILE COMMUNICATION NETWORK WITH AT LEAST ONE USER EQUIPMENT, USER EQUIPMENT, BASE STATION ENTITY, SYSTEM OR MOBILE COMMUNICATION NETWORK, PROGRAM AND COMPUTER-READABLE MEDIUM**
VERFAHREN ZUM BETREIBEN EINES FUNKZUGANGSNETZES EINES MOBILEN KOMMUNIKATIONSNETZES MIT ZUMINDEST EINEM BENUTZERGERÄT, BENUTZERGERÄT, BASISSTATIONSEINHEIT, SYSTEM ODER MOBILES KOMMUNIKATIONSNETZ
PROCÉDÉ DE FONCTIONNEMENT D'UN RÉSEAU D'ACCÈS RADIO D'UN RÉSEAU DE COMMUNICATION MOBILE AVEC AU MOINS UN ÉQUIPEMENT UTILISATEUR, ÉQUIPEMENT UTILISATEUR

(43) Date of publication of application: 20.11.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2013/159830
- WO-A2-2018/125686

## Description

### BACKGROUND

The present invention relates a method for operating a radio access network of a mobile communication network with at least one user equipment, the radio access network comprising at least one base station entity and the at least one user equipment being connected with, or served by, the at least one base station entity,
wherein, in case that the user equipment is in connected mode, both the base station entity and the user equipment are configured to apply or to use a connected mode discontinuous transmission-reception pattern.

Furthermore, the present invention relates to a user equipment for being operated with a radio access network of a mobile communication network, wherein the user equipment is configured to connect to or be served by at least one base station entity as part of the radio access network,
wherein, in case that the user equipment is in connected mode, the user equipment is configured to apply or to use a connected mode discontinuous transmission-reception pattern.

Furthermore, the present invention relates to a base station entity for being operated as part of a radio access network of a mobile communication network and with at least one user equipment, the user equipment being connected with, or served by, the base station entity,
wherein, in case that the user equipment is in connected mode, both the base station entity and the user equipment are configured to apply or to use a connected mode discontinuous transmission-reception pattern.

Furthermore, the present invention relates to a system or to a telecommunications network for operating a radio access network of the mobile communication network with at least one user equipment, the radio access network comprising at least one base station entity and the at least one user equipment being connected with, or served by, the at least one base station entity,
wherein, in case that the user equipment is in connected mode, both the base station entity and the user equipment are configured to apply or to use a connected mode discontinuous transmission-reception pattern.

Furthermore, the present invention relates to a program and to a computer-readable medium for operating a radio access network of a mobile communication network with at least one user equipment according to the inventive method.

The present invention relates to the area of telecommunications networks, especially wireless telecommunications networks or mobile communication networks. In such conventionally known telecommunications networks or mobile communication networks, the network nodes or components of the radio access network that are used to provide communication services to a plurality of user equipments typically require a considerable amount of energy in order to be able to provide the required communication services to the user equipments located in the geographical coverage area of the considered mobile communication network.

In order to reduce such power consumption needs, it is conventionally known to use discontinuous transmission-reception pattern, i.e. within a repeating time interval or cycle of time intervals, during some parts of such time intervals, the respective parts or network nodes or components of the radio access network are - at least partly - powered off (or, at least, powered-down) such as to be able to save energy, and during some other parts of such time intervals, the respective parts or network nodes or components of the radio access network are powered on in order to be able to provide the required communication services to the respective user equipments.

Especially, it is known that - within a radio cell being served by a base station entity - the base station entity enters a discontinuous transmission-reception pattern such as to be able to reduce its needs in energy consumption, while still being able to provide the required communication services requested from the user equipments; of course, this is typically only possible in situations of off-peak demand of communication services (within the considered radio cell). However, in case that - within the considered radio cell - one user equipment or a plurality of user equipments is/are located that are served by that considered base station entity, some kind of coordination is required between the base station entity on the one hand and the respective user equipments on the other hand in order to be able to apply a discontinuous transmission-reception pattern within the considered radio cell and involving such user equipments.

Especially in case of different communication needs of such a plurality of user equipments within a radio cell (or served by a base station entity), it might well be the case that a first kind of discontinuous transmission-reception pattern might be most adapted (or sufficient) regarding a first user equipment (or a first group of user equipments) while a second discontinuous transmission-reception pattern might be most adapted (or required) regarding a second user equipment (or a second group of user equipments). In such situations, it might be challenging not only to provide for the mentioned coordination when applying discontinuous transmission-reception pattern involving a plurality of user equipments but also to provide for corresponding signaling procedures.

Especially it is also known that different communications service might have different requirements in terms of communication needs, typically resulting in periodic communication opportunities between the network and the user equipments. Hence the is no "one fits all" communication opportunity pattern which can be realized by a single discontinuous transmission-reception pattern. The document WO2013/159830 A1 describes data transmission using shared uplink control channel resource. The document WO2018/125686 A2 describes methods and devices for radio communications.

### SUMMARY

An object of the present invention is to provide an effective and simple approach for operating a radio access network of a mobile communication network with at least one user equipment, wherein both the base station entity and the user equipment are configured to apply or to use the most appropriate discontinuous transmission-reception pattern in a flexible manner and with reduced signaling requirements. A further object of the present invention is to provide a corresponding user equipment, a corresponding base station entity, a corresponding system or a telecommunications network, and a corresponding program and computer-readable medium.

The object of the present invention is achieved by a method for operating a radio access network of a mobile communication network with at least one user equipment, the radio access network comprising at least one base station entity and the at least one user equipment being connected with, or served by, the at least one base station entity,
wherein, in case that the user equipment is in connected mode, both the base station entity and the user equipment are configured to apply or to use a connected mode discontinuous transmission-reception pattern,
wherein, according to the connected mode discontinuous transmission-reception pattern, repeatedly occurring active time intervals are defined such that data transmission and/or reception occurs, in uplink and/or in downlink direction and between the base station entity on the one hand and the user equipment on the other hand,
wherein, in order to operate the base station entity with the user equipment, the method comprises the following steps:
   -- in a first step, the user equipment transmits a scheduling request indication to the base station entity,
   -- in a second step, the base station entity transmits a control signaling to the user equipment, the transmission of the control signaling resulting in the base station entity and the user equipment being configured to apply or to use a further connected mode discontinuous transmission-reception pattern, wherein, according to the further connected mode discontinuous transmission-reception pattern, besides the repeatedly occurring active time intervals, repeatedly occurring additional active time intervals are defined and used for data transmission and/or reception, in uplink and/or in downlink direction, between the base station entity on the one hand and the user equipment on the other hand.

It is thereby advantageously possible, according to the present invention, that it is easily possible to provide for the use of a better or more optimally adapted discontinuous transmission-reception pattern between the base station entity on the one hand and the user equipments (within the radio coverage area of the considered base station entity) on the other hand; especially it is advantageously possible to apply different kinds of discontinuous transmission-reception pattern regarding different user equipments or groups of user equipments in a comparatively easy manner and without requiring huge signaling efforts.
This is especially relevant if voice-related communication services (or voice-centric communication services) are involved: Typically, voice-related or voice-centric communication or communication services require active time intervals (i.e. time intervals during which the respective base station entity is able to transmit and receive data, especially user plane data) at least every 20 ms to 60 ms; in contrast, other communication services are able to be provided while applying a more relaxed discontinuous transmission-reception pattern between the base station entity and the user equipments concerned (with off-times possibly exceeding 80 ms, 100 ms or even 150 ms).
Hence, in case that, in a radio cell or in a radio coverage area served by a base station entity, there are 100 user equipments (especially in connected mode) that only require (for their communication needs or the requested communication services) a relaxed discontinuous transmission-reception pattern, and one specific user equipment of these user equipments needs to be provided with voice-related or voice-centric communication services (typically a voice call, either mobile originated or mobile terminated), there is potentially the need to change (or to adapt) the discontinuous transmission-reception pattern (applied prior to the voice-related or voice-centric communication need) not only for the specific user equipment but also for the other 99 user equipments as well. Likewise, this might involve signaling procedures to be conducted not only for the specific user equipment but also for the other 99 user equipment as well. The same might also be required (in opposite direction) after termination of the voice-related or voice-centric communication need. This is especially the case that for base station implementation simplicity reasons only one discontinuous transmission-reception pattern should be active at a given time instance, especially if this single discontinuous transmission-reception pattern is applied on a single frequency of the radio access network of a mobile communication network.

According to the present invention, such a scenario is advantageously able to be avoided, and, hence, not only the change of the applied discontinuous transmission-reception pattern (regarding the other 99 user equipments) avoided but also the associated signaling procedures (regarding the other 99 user equipments) avoided. Additionally, it is avoided to operate a base station entity of a radio access network of a mobile communication network with more than a single discontinuous transmission-reception pattern.
However, it might be beneficial to allow the other 99 (or at least part thereof) user equipments to use the increased communication possibilities provided by the further connected mode discontinuous transmission-reception pattern; this might might, e.g., be indicated, by the base station entity, via a signaling procedure (e.g. via broadcast or dedicated signaling); in such a situation, of course, upon termination of the further connected mode discontinuous transmission-reception pattern, this termination also needs to be signaled accordingly.

According to the present invention, this is able to be achieved by means of, in case that a considered user equipment is in connected mode, both the base station entity and the user equipment being configured to apply or to use a connected mode discontinuous transmission-reception pattern that has repeatedly occurring active time intervals. In case that the considered user equipment needs (due to its communication needs, especially in case of voice-centric communication services being requested) a less relaxed (connected mode) discontinuous transmission-reception pattern, the further connected mode discontinuous transmission-reception pattern is used which provides, besides the repeatedly occurring active time intervals, repeatedly occurring additional active time intervals.
Hence, according to the present invention the (repeatedly occurring) active time intervals (of or provided by the connected mode discontinuous transmission-reception pattern) are identically reused when applying the further connected mode discontinuous transmission-reception pattern, but in addition to those active time intervals, the additional active time intervals are able to be used for data transmission and/or reception, in uplink and/or in downlink direction, between the base station entity on the one hand and the user equipment on the other hand.

Especially, by means of providing the connected mode discontinuous transmission-reception pattern and the further connected mode discontinuous transmission-reception pattern according to the present invention, it is furthermore advantageously possible to save energy not only on the side of the base station entity, but - perhaps even more importantly as the user equipments are typically realized as battery powered devices - also on the side of the user equipments: In the scenario described, it is, hence, advantageously possible to avoid any modification of the applied connected mode discontinuous transmission-reception pattern (and also any additional active time periods) regarding the 99 user equipments that are not involved in higher-demand (e.g. less-latency) communication services (such as voice-centric communication services); additionally, any associated signaling effort is able to be avoided, likewise reducing energy consumption needs - both on the side of those user equipments and on the side of the base station entity.

According to the present invention, it is advantageously possible and preferred that data transmission and/or reception, especially user plane data transmission and/or reception, in uplink and/or in downlink direction and between the base station entity and the user equipment, occurs
-- when applying the connected mode discontinuous transmission-reception pattern only during the active time intervals and
-- when applying the further connected mode discontinuous transmission-reception pattern only during either the active time intervals or the additional active time intervals, wherein especially the further connected mode discontinuous transmission-reception pattern is defined by means of both the active time intervals and the additional active time intervals,
wherein especially the active time intervals, while the connected mode discontinuous transmission-reception pattern is applied, correspond to a proper subset of the active time intervals while the further connected mode discontinuous transmission-reception pattern is applied.

By means of being able to deactivate, at least partly, the base station entity during the off-time periods (i.e. outside of the active time intervals and/or outside the additional active time intervals), it is advantageously possible to save significant energy at the base station entity as well as on the side of the involved user equipments.

According to the present invention, it is furthermore advantageously possible and preferred that the further connected mode discontinuous transmission-reception pattern is used in order to provide the user equipment with one or a plurality of voice-centric communication services,
wherein especially, in a third step subsequent to the second step and after termination of the one or plurality of voice-centric communication services, the user equipment terminates using the further connected mode discontinuous transmission-reception pattern and again uses or applies the connected mode discontinuous transmission-reception pattern,
wherein especially this transition to using or applying the connected mode discontinuous transmission-reception pattern involves a further control signaling transmitted, by the base station entity, to the user equipment, or this transition is applied implicitly, without further control signaling, by the user equipment after termination of the voice-centric communication service.

According to the present invention, it is thereby advantageously possible that the inventive method is able to be performed in a flexible and efficient manner.

According to the present invention, it is furthermore advantageously possible and preferred that the control signaling, transmitted to the user equipment, comprises the definition of the further connected mode discontinuous transmission-reception pattern, wherein especially, by means of the control signaling, the previously applied configuration regarding the application of the connected mode discontinuous transmission-reception pattern is overwritten or deleted.

According to the present invention, it is thereby advantageously possible that the inventive method is able to be performed in a flexible and efficient manner.

According to the present invention, it is furthermore advantageously possible and preferred that the user equipment - while being connected with, or served by, the base station entity - is configured such as to comprise configuration information regarding both the connected mode discontinuous transmission-reception pattern and the further connected mode discontinuous transmission-reception pattern, wherein the user equipment is able to alternatively be operated either in a first mode of operation or in a second mode of operation,
wherein, in the first mode of operation, the user equipment applies or uses the connected mode discontinuous transmission-reception pattern and wherein, in the second mode of operation, the user equipment applies or uses the further connected mode discontinuous transmission-reception pattern, wherein the control signaling, transmitted to the user equipment comprises the information to apply or use the second mode of operation rather than the first mode of operation.

According to the present invention, it is thereby advantageously possible that the inventive method is able to be performed in a flexible and efficient manner. Especially, by means of the user equipment comprising configuration information regarding both the connected mode discontinuous transmission-reception pattern and the further connected mode discontinuous transmission-reception pattern, it is advantageously possible to even further reduce the signaling efforts in order to change the applied connected mode discontinuous transmission-reception pattern, as the respective connected mode discontinuous transmission-reception pattern only needs to be indicated (and not necessarily its definition to be transmitted).

According to the present invention, it is furthermore advantageously possible and preferred that - besides the user equipment - at least a further user equipment is connected with, or served by, the base station entity,
wherein, in case that both user equipments are in connected mode, both user equipments are configured to apply or to use the connected mode discontinuous transmission-reception pattern,
wherein, after the base station entity having transmitted the control signaling to the user equipment in response to the scheduling request indication, the further user equipment still applies the connected mode discontinuous transmission-reception pattern, wherein especially no control signaling is required to be transmitted to the further user equipment.

According to the present invention, it is thereby advantageously possible that the inventive method is able to be performed in a flexible and efficient manner.

According to the present invention, it is furthermore advantageously possible and preferred that both the base station entity and the user equipment are configured to apply or to use a second further connected mode discontinuous transmission-reception pattern, wherein according to the second further connected mode discontinuous transmission-reception pattern repeatedly occurring further additional active time intervals are defined - in addition to the active time intervals - such that data transmission and/or reception occurs, in uplink and/or in downlink direction and between the base station entity on the one hand and the user equipment on the other hand, during either the active time intervals or the further additional active time intervals,
wherein especially the further additional active time intervals is a proper subset of the additional active time intervals.

According to the present invention, it is thereby advantageously possible that the inventive method is able to be performed in a flexible and efficient manner.

According to the present invention, it is furthermore advantageously possible and preferred that the connected mode discontinuous transmission-reception pattern is defined by means of indicating at least one of the following:
-- a point in time indicating the beginning of one of the active time intervals and a repetition time interval,
-- the points in time indicating the beginning of the active time intervals, respectively, and/or

wherein the further connected mode discontinuous transmission-reception pattern is defined by means of indicating at least one of the following:
   -- a point in time indicating the beginning of one of the active time intervals or one of the additional active time intervals and a further repetition time interval,
   -- the points in time indicating the beginning of the active time intervals, respectively, and of the additional active time intervals, respectively,
wherein especially the point or points in time indicating the beginning of one or a plurality of the active time intervals or of the additional active time intervals is/are defined using an offset time interval, wherein the offset time interval is defined with regard to a point in time or with regard to a plurality of points in time corresponding to the system frame number being equal to zero or an offset to zero.

According to the present invention, it is thereby advantageously possible that the inventive method is able to be performed in a flexible and efficient manner.

Furthermore, the present invention relates to a user equipment for being operated with a radio access network of a mobile communication network, wherein the user equipment is configured to connect to or be served by at least one base station entity as part of the radio access network,
wherein, in case that the user equipment is in connected mode, the user equipment is configured to apply or to use a connected mode discontinuous transmission-reception pattern,
wherein the user equipment is configured such that, according to the connected mode discontinuous transmission-reception pattern, repeatedly occurring active time intervals are defined such that data transmission and/or reception occurs, in uplink and/or in downlink direction and between the base station entity on the one hand and the user equipment on the other hand,
wherein, in order to being operated with the base station entity, the user equipment is configured such that:
   -- the user equipment transmits a scheduling request indication to the base station entity,
   -- the user equipment receives, from the base station entity, a control signaling, the reception of the control signaling resulting in the user equipment being configured to apply or to use a further connected mode discontinuous transmission-reception pattern, wherein, according to the further connected mode discontinuous transmission-reception pattern, besides the repeatedly occurring active time intervals, repeatedly occurring additional active time intervals are defined and used for data transmission and/or reception, in uplink and/or in downlink direction, between the base station entity on the one hand and the user equipment on the other hand.

Additionally, the present invention relates to a base station entity for being operated as part of a radio access network of a mobile communication network and with at least one user equipment, the user equipment being connected with, or served by, the base station entity,
wherein, in case that the user equipment is in connected mode, both the base station entity and the user equipment are configured to apply or to use a connected mode discontinuous transmission-reception pattern,
wherein the base station entity is configured such that, according to the connected mode discontinuous transmission-reception pattern, repeatedly occurring active time intervals are defined such that data transmission and/or reception occurs, in uplink and/or in downlink direction and between the base station entity on the one hand and the user equipment on the other hand,
wherein, in order to operate the base station entity with the user equipment, the base station entity is configured such that:
   -- the base station entity receives a scheduling request indication from the user equipment,
   -- the base station entity transmits a control signaling to the user equipment, the transmission of the control signaling resulting in the base station entity and the user equipment being configured to apply or to use a further connected mode discontinuous transmission-reception pattern, wherein, according to the further connected mode discontinuous transmission-reception pattern, besides the repeatedly occurring active time intervals, repeatedly occurring additional active time intervals are defined and used for data transmission and/or reception, in uplink and/or in downlink direction, between the base station entity on the one hand and the user equipment on the other hand.

Additionally, the present invention relates to a system or to a mobile communication network for operating a radio access network of the mobile communication network with at least one user equipment, the radio access network comprising at least one base station entity and the at least one user equipment being connected with, or served by, the at least one base station entity,
wherein, in case that the user equipment is in connected mode, both the base station entity and the user equipment are configured to apply or to use a connected mode discontinuous transmission-reception pattern,
wherein, according to the connected mode discontinuous transmission-reception pattern, repeatedly occurring active time intervals are defined such that data transmission and/or reception occurs, in uplink and/or in downlink direction and between the base station entity on the one hand and the user equipment on the other hand,
wherein, in order to operate the base station entity with the user equipment, the system or mobile communication network is configured such that:
   -- the user equipment transmits a scheduling request indication to the base station entity,
   -- the base station entity transmits a control signaling to the user equipment, the transmission of the control signaling resulting in the base station entity and the user equipment being configured to apply or to use a further connected mode discontinuous transmission-reception pattern, wherein, according to the further connected mode discontinuous transmission-reception pattern, besides the repeatedly occurring active time intervals, repeatedly occurring additional active time intervals are defined and used for data transmission and/or reception, in uplink and/or in downlink direction, between the base station entity on the one hand and the user equipment on the other hand.

Additionally, the present invention relates to a program comprising a computer readable program code which, when executed on a computer or on a user equipment or on a base station entity, or in part on the user equipment and/or in part on the base station entity, causes the computer or the user equipment or the base station entity, to perform the inventive method.

Still additionally, the present invention relates to a computer-readable medium comprising instructions which, when executed on a computer or on a user equipment or on a base station entity, or in part on the user equipment and/or in part on the base station entity, causes the computer or the user equipment or the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment as well as a further user equipment, wherein the (radio) access network comprises a number of base station entities providing radio coverage for specific geographical areas, respectively.
Figure 2 schematically illustrates different connected mode discontinuous transmission-reception pattern according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

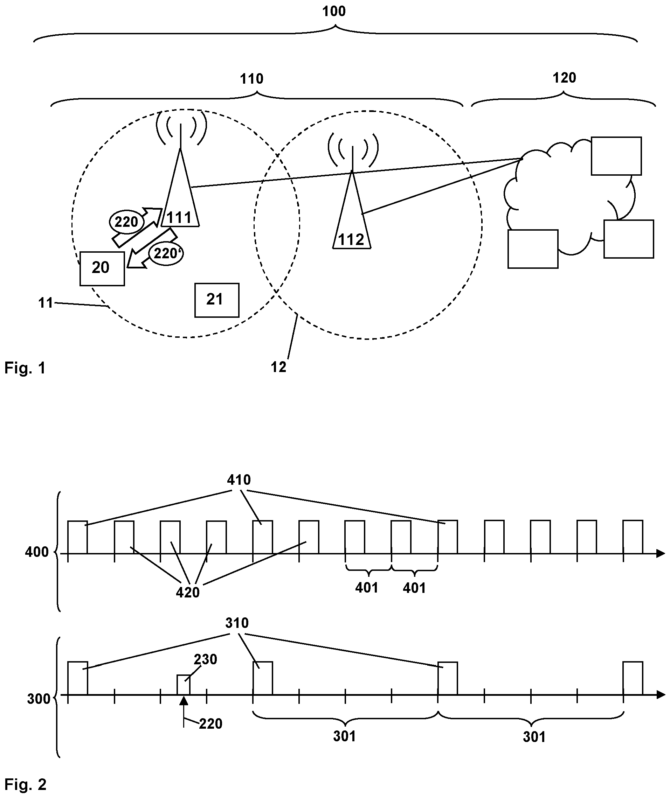

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. Examples of such network functions or services include, e.g., an access and mobility management function, AMF, and/or a user plane function, UPF - especially in case of a 5G mobile communication network. The access network 110 or radio access network 110 comprises a plurality of radio cells 11, 12, i.e. geographical areas served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality or next-generation gNB functionality. The mobile communication network 100 is typically connected to a plurality of user equipments (or, rather, the user equipments are connected to the telecommunications network 100). Figure 1 schematically shows a user equipment 20 and a further user equipment 21.

As shown in Figure 1, according to the present invention, the user equipment 20 is connected with, or served by, the base station entity 111.
in case that the user equipment 20 is in connected mode, both the base station entity 111 and the user equipment 20 are configured to apply or to use a connected mode discontinuous transmission-reception pattern.

The connected mode discontinuous transmission-reception pattern 300 is schematically shown in Figure 1 - together with the further connected mode discontinuous transmission-reception pattern 400:

According to the connected mode discontinuous transmission-reception pattern 300, repeatedly occurring (i.e. having a repetition time interval 301) active time intervals 310 are defined such that data transmission and/or reception is able to occur, in uplink and/or in downlink direction and between the base station entity 111 on the one hand and the user equipment 20 on the other hand.

Figure 2 schematically and exemplarily shows - by means of a horizontal arrow regarding the connected mode discontinuous transmission-reception pattern 300 - a time evolution. During the time evolution represented, four occasions of active time intervals 310 are schematically shown (but only three of which are indicated by means of reference sign 310).

Furthermore, Figure 2 represents the further connected mode discontinuous transmission-reception pattern 400; according to the further connected mode discontinuous transmission-reception pattern 400, repeatedly occurring active time intervals 410 and (likewise repeatedly occurring) additional active time intervals 420 - both kinds of active time intervals 410, 420 having, collectively, a further repetition time interval 401 - are defined such that data transmission and/or reception is able to occur, in uplink and/or in downlink direction and between the base station entity 111 on the one hand and the user equipment 20 on the other hand.

As well regarding the further connected mode discontinuous transmission-reception pattern 400, Figure 2 schematically and exemplarily shows - likewise by means of a horizontal arrow - a time evolution. During the time evolution represented, likewise four occasions of active time intervals 410 are schematically shown (but only three of which are indicated by means of reference sign 410); furthermore, the time evolution shows the additional active time intervals 420 - represented between the active time intervals 410, wherein, exemplarily, in-between two succeeding active time intervals 410 three additional time intervals 420 are located, respectively (but only fourth of which are indicated by means of reference sign 420).

The connected mode discontinuous transmission-reception pattern 300 is defined by means of the respective active time intervals, especially by means of indicating at least one of the following:
-- a point in time indicating the beginning of one of the active time intervals 310 and the repetition time interval 301,
-- the points in time indicating the beginning of the active time intervals 310, respectively.

The further connected mode discontinuous transmission-reception pattern 400 is likewise defined by means of its respective active time intervals, especially by means of indicating at least one of the following:
-- a point in time indicating the beginning of one of the active time intervals 310 or one of the additional active time intervals 420 and the further repetition time interval 401,
-- the points in time indicating the beginning of the active time intervals 310, respectively, and of the additional active time intervals 420, respectively.

Especially the point or points in time indicating the beginning of one or a plurality of the active time intervals 310, 410 or of the additional active time intervals 420 is/are defined using an offset time interval (not shown in Figure 2), wherein the offset time interval is defined with regard to a point in time or with regard to a plurality of points in time corresponding to the system frame number being equal to zero or an offset to zero.

According to the present invention, in case that the user equipment 20 requires the connected mode discontinuous transmission-reception pattern to be changed (especially towards a less relaxed discontinuous transmission-reception pattern, i.e. having a reduced repetition time interval such as the further repetition time interval 401 compared to the repetition time interval 301), the user equipment 20 transmits a scheduling request indication 220 to the base station entity 111. This is schematically shown in Figure 1 by means of an arrow directing from the user equipment 20 towards the base station entity 111.

As a result, the base station entity 111 transmits a control signaling 220' to the user equipment 20 (schematically represented, in Figure 1, by means of an arrow directing from the base station entity 111 towards the user equipment 20).

The transmission of the control signaling 220' results in the base station entity 111 and the user equipment 20 being configured to apply or to use the further connected mode discontinuous transmission-reception pattern 400, wherein, according to the further connected mode discontinuous transmission-reception pattern 400, besides the repeatedly occurring active time intervals 310 (or 410), the repeatedly occurring additional active time intervals 420 are defined and are used (or able to be used) for data transmission and/or reception, in uplink and/or in downlink direction, between the base station entity 111 on the one hand and the user equipment 20 on the other hand.

An event of the user equipment 20 requiring the (hitherto applied) connected mode discontinuous transmission-reception pattern to be changed (towards a less relaxed discontinuous transmission-reception pattern, having a reduced further repetition time interval 401) is exemplarily shown in Figure 2: the user equipment 20 transmits, to the base station entity 111, the scheduling request indication 220 which results in the connected mode discontinuous transmission-reception pattern to be changed; especially the scheduling request indication 220 is required to be sent, by the user equipment 20, during a random access occasion (such as a random access channel (RACH) occasion) time period; such a random access occasion is schematically designated, in Figure 2, by means of reference sign 230.

In the example shown, the repetition time interval 301 corresponds to four times the further repetition time interval 401 (i.e. 4:1) - of course, other ratios are possible and preferred according to the present invention, especially 2:1; 8:1; 16:1; 32:1. Especially the further repetition time interval 401 might correspond, e.g., to 10 ms, or to 20 ms, or to 30 ms, or to 40 ms, whereas the repetition time interval 301 might correspond to 80 ms, or to 120 ms, or to 160 ms, or to 240 ms, or to 320 ms, or to 640 ms, or to 1280 ms, or to 2560 ms.

Furthermore, it is advantageously possible to implement - besides the connected mode discontinuous transmission-reception pattern 300 and the further connected mode discontinuous transmission-reception pattern 400 - a second further connected mode discontinuous transmission-reception pattern (not shown in the Figures). Especially, according to the second further connected mode discontinuous transmission-reception pattern repeatedly occurring further additional active time intervals are defined - in addition to the active time intervals 310 (of the connected mode discontinuous transmission-reception pattern 300) - such that data transmission and/or reception occurs, in uplink and/or in downlink direction and between the base station entity 111 on the one hand and the user equipment 20 on the other hand, during either the active time intervals 310 or the further additional active time intervals. Especially the further additional active time intervals is a proper subset of the additional active time intervals 420 (i.e. per unit of time there are less further additional active time intervals compared to additional active time intervals, i.e. the second further repetition time interval of the second further connected mode discontinuous transmission-reception pattern is larger (longer) than the further repetition time interval 401 but shorter than the repetition time interval 301. Especially, the second further connected mode discontinuous transmission-reception pattern might be applied in case that the is no requirement of providing voice-centric communication services (i.e. applying the further connected mode discontinuous transmission-reception pattern 400) but the communication requirements are such that applying the connected mode discontinuous transmission-reception pattern 300 would be insufficient.

## Claims

1. Method for operating a radio access network (110) of a mobile communication network (100) with at least one user equipment (20), the radio access network (110) comprising at least one base station entity (111) and the at least one user equipment (20) being connected with, or served by, the at least one base station entity (111),
wherein, in case that the user equipment (20) is in connected mode, both the base station entity (111) and the user equipment (20) are configured to apply or to use a connected mode discontinuous transmission-reception pattern (300),
wherein, according to the connected mode discontinuous transmission-reception pattern (300), repeatedly occurring active time intervals (310) are defined such that data transmission and/or reception occurs, in uplink and/or in downlink direction and between the base station entity (111) on the one hand and the user equipment (20) on the other hand,
wherein, in order to operate the base station entity (111) with the user equipment (20), the method comprises the following steps:
-- in a first step, the user equipment (20) transmits a scheduling request indication (220) to the base station entity (111),
-- in a second step, the base station entity (111) transmits a control signaling (220') to the user equipment (20), the transmission of the control signaling (220') resulting in the base station entity (111) and the user equipment (20) being configured to apply or to use a further connected mode discontinuous transmission-reception pattern (400), wherein, according to the further connected mode discontinuous transmission-reception pattern (400), besides the repeatedly occurring active time intervals (310), repeatedly occurring additional active time intervals (420) are defined and used for data transmission and/or reception, in uplink and/or in downlink direction, between the base station entity (111) on the one hand and the user equipment (20) on the other hand.

2. Method according to claim 1, wherein data transmission and/or reception, especially user plane data transmission and/or reception, in uplink and/or in downlink direction and between the base station entity (111) and the user equipment (20), occurs
-- when applying the connected mode discontinuous transmission-reception pattern (300) only during the active time intervals (310) and
-- when applying the further connected mode discontinuous transmission-reception pattern (400) only during either the active time intervals (310) or the additional active time intervals (420),
wherein especially the further connected mode discontinuous transmission-reception pattern (400) is defined by means of both the active time intervals (310) and the additional active time intervals (420),
wherein especially the active time intervals, while the connected mode discontinuous transmission-reception pattern (300) is applied, correspond to a proper subset of the active time intervals while the further connected mode discontinuous transmission-reception pattern (400) is applied.

3. Method according to one of the preceding claims, wherein the further connected mode discontinuous transmission-reception pattern (400) is used in order to provide the user equipment (20) with one or a plurality of voice-centric communication services,
wherein especially, in a third step subsequent to the second step and after termination of the one or plurality of voice-centric communication services, the user equipment (20) terminates using the further connected mode discontinuous transmission-reception pattern (400) and again uses or applies the connected mode discontinuous transmission-reception pattern (300), wherein especially this transition to using or applying the connected mode discontinuous transmission-reception pattern (300) involves a further control signaling transmitted, by the base station entity (111), to the user equipment (20), or this transition is applied implicitly, without further control signaling, by the user equipment (20) after termination of the voice-centric communication service.

4. Method according to one of the preceding claims, wherein the control signaling (220'), transmitted to the user equipment (20), comprises the definition of the further connected mode discontinuous transmission-reception pattern (400), wherein especially, by means of the control signaling, the previously applied configuration regarding the application of the connected mode discontinuous transmission-reception pattern (300) is overwritten or deleted.

5. Method according to one of the preceding claims, wherein the user equipment (20) - while being connected with, or served by, the base station entity (111) - is configured such as to comprise configuration information regarding both the connected mode discontinuous transmission-reception pattern (300) and the further connected mode discontinuous transmission-reception pattern (400), wherein the user equipment (20) is able to alternatively be operated either in a first mode of operation or in a second mode of operation,
wherein, in the first mode of operation, the user equipment (20) applies or uses the connected mode discontinuous transmission-reception pattern (300) and wherein, in the second mode of operation, the user equipment (20) applies or uses the further connected mode discontinuous transmission-reception pattern (400), wherein the control signaling (220'), transmitted to the user equipment (20) comprises the information to apply or use the second mode of operation rather than the first mode of operation.

6. Method according to one of the preceding claims, wherein - besides the user equipment (20) - at least a further user equipment (21) is connected with, or served by, the base station entity (111),
wherein, in case that both user equipments (20, 21) are in connected mode, both user equipments (20, 21) are configured to apply or to use the connected mode discontinuous transmission-reception pattern (300),
wherein, after the base station entity (111) having transmitted the control signaling (220') to the user equipment (20) in response to the scheduling request indication (220), the further user equipment (21) still applies the connected mode discontinuous transmission-reception pattern (300), wherein especially no control signaling is required to be transmitted to the further user equipment (21).

7. Method according to one of the preceding claims, wherein both the base station entity (111) and the user equipment (20) are configured to apply or to use a second further connected mode discontinuous transmission-reception pattern, wherein according to the second further connected mode discontinuous transmission-reception pattern repeatedly occurring further additional active time intervals are defined - in addition to the active time intervals (310) - such that data transmission and/or reception occurs, in uplink and/or in downlink direction and between the base station entity (111) on the one hand and the user equipment (20) on the other hand, during either the active time intervals (310) or the further additional active time intervals, wherein especially the further additional active time intervals is a proper subset of the additional active time intervals (420).

8. Method according to one of the preceding claims, wherein the connected mode discontinuous transmission-reception pattern (300) is defined by means of indicating at least one of the following:
-- a point in time indicating the beginning of one of the active time intervals (310) and a repetition time interval (301),
-- the points in time indicating the beginning of the active time intervals (310), respectively,
and/or
wherein the further connected mode discontinuous transmission-reception pattern (400) is defined by means of indicating at least one of the following:
-- a point in time indicating the beginning of one of the active time intervals (310) or one of the additional active time intervals (420) and a further repetition time interval (401),
-- the points in time indicating the beginning of the active time intervals (310), respectively, and of the additional active time intervals (420), respectively,
wherein especially the point or points in time indicating the beginning of one or a plurality of the active time intervals (310) or of the additional active time intervals (420) is/are defined using an offset time interval, wherein the offset time interval is defined with regard to a point in time or with regard to a plurality of points in time corresponding to the system frame number being equal to zero or an offset to zero.

9. User equipment (20) for being operated with a radio access network (110) of a mobile communication network (100), wherein the user equipment (20) is configured to connect to or be served by at least one base station entity (111) as part of the radio access network (110),
wherein, in case that the user equipment (20) is in connected mode, the user equipment (20) is configured to apply or to use a connected mode discontinuous transmission-reception pattern (300),
wherein the user equipment (20) is configured such that, according to the connected mode discontinuous transmission-reception pattern (300), repeatedly occurring active time intervals (310) are defined such that data transmission and/or reception occurs, in uplink and/or in downlink direction and between the base station entity (111) on the one hand and the user equipment (20) on the other hand,
wherein, in order to being operated with the base station entity (111), the user equipment (20) is configured such that:
-- the user equipment (20) transmits a scheduling request indication (220) to the base station entity (111),
-- the user equipment (20) receives, from the base station entity (111), a control signaling (220'), the reception of the control signaling (220') resulting in the user equipment (20) being configured to apply or to use a further connected mode discontinuous transmission-reception pattern (400), wherein, according to the further connected mode discontinuous transmission-reception pattern (400), besides the repeatedly occurring active time intervals (310), repeatedly occurring additional active time intervals (420) are defined and used for data transmission and/or reception, in uplink and/or in downlink direction, between the base station entity (111) on the one hand and the user equipment (20) on the other hand.

10. Base station entity (111) for being operated as part of a radio access network (110) of a mobile communication network (100) and with at least one user equipment (20), the user equipment (20) being connected with, or served by, the base station entity (111),
wherein, in case that the user equipment (20) is in connected mode, both the base station entity (111) and the user equipment (20) are configured to apply or to use a connected mode discontinuous transmission-reception pattern (300),
wherein the base station entity (111) is configured such that, according to the connected mode discontinuous transmission-reception pattern (300), repeatedly occurring active time intervals (310) are defined such that data transmission and/or reception occurs, in uplink and/or in downlink direction and between the base station entity (111) on the one hand and the user equipment (20) on the other hand,
wherein, in order to operate the base station entity (111) with the user equipment (20), the base station entity (111) is configured such that:
-- the base station entity (111) receives a scheduling request indication (220) from the user equipment (20),
-- the base station entity (111) transmits a control signaling (220') to the user equipment (20), the transmission of the control signaling (220') resulting in the base station entity (111) and the user equipment (20) being configured to apply or to use a further connected mode discontinuous transmission-reception pattern (400), wherein, according to the further connected mode discontinuous transmission-reception pattern (400), besides the repeatedly occurring active time intervals (310), repeatedly occurring additional active time intervals (420) are defined and used for data transmission and/or reception, in uplink and/or in downlink direction, between the base station entity (111) on the one hand and the user equipment (20) on the other hand.

11. System or mobile communication network (100) for operating a radio access network (110) of the mobile communication network (100) with at least one user equipment (20), the radio access network (110) comprising at least one base station entity (111) and the at least one user equipment (20) being connected with, or served by, the at least one base station entity (111), wherein, in case that the user equipment (20) is in connected mode, both the base station entity (111) and the user equipment (20) are configured to apply or to use a connected mode discontinuous transmission-reception pattern (300),
wherein, according to the connected mode discontinuous transmission-reception pattern (300), repeatedly occurring active time intervals (310) are defined such that data transmission and/or reception occurs, in uplink and/or in downlink direction and between the base station entity (111) on the one hand and the user equipment (20) on the other hand, wherein, in order to operate the base station entity (111) with the user equipment (20), the system or mobile communication network (100) is configured such that:
-- the user equipment (20) transmits a scheduling request indication (220) to the base station entity (111),
-- the base station entity (111) transmits a control signaling (220') to the user equipment (20), the transmission of the control signaling (220') resulting in the base station entity (111) and the user equipment (20) being configured to apply or to use a further connected mode discontinuous transmission-reception pattern (400), wherein, according to the further connected mode discontinuous transmission-reception pattern (400), besides the repeatedly occurring active time intervals (310), repeatedly occurring additional active time intervals (420) are defined and used for data transmission and/or reception, in uplink and/or in downlink direction, between the base station entity (111) on the one hand and the user equipment (20) on the other hand.

12. Program comprising a computer readable program code which, when executed on a computer or on a user equipment (20) or on a base station entity (111), or in part on the user equipment (20) and/or in part on the base station entity (111), causes the computer or the user equipment (20) or the base station entity (111), to perform a method according one of claims 1 to 8.

13. Computer-readable medium comprising instructions which, when executed on a computer or on a user equipment (20) or on a base station entity (111), or in part on the user equipment (20) and/or in part on the base station entity (111), causes the computer or the user equipment (20) or the base station entity (111), to perform a method according one of claims 1 to 8.

## Patentansprüche

1. Verfahren zum Betreiben eines Funkzugangsnetzes (110) eines Mobilkommunikationsnetzes (100) mit mindestens einer Benutzerausrüstung (20), wobei das Funkzugangsnetz (110) mindestens eine Basisstationsentität (111) umfasst und die mindestens eine Benutzerausrüstung (20) mit der mindestens einen Basisstationsentität (111) verbunden ist oder durch diese bedient wird,
wobei für den Fall, dass sich die Benutzerausrüstung (20) im verbundenen Modus befindet, sowohl die Basisstationsentität (111) als auch die Benutzerausrüstung (20) dazu eingerichtet werden, ein diskontinuierliches Sende-Empfangs-Muster (300) des verbundenen Modus anzuwenden oder zu verwenden,
wobei, gemäß dem diskontinuierlichen Sende-Empfangs-Muster (300) des verbundenen Modus, wiederholt auftretende aktive Zeitintervalle (310) so definiert werden, dass ein Datensenden und/oder ein Datenempfangen in Uplink- und/oder in Downlinkrichtung und zwischen der Basisstationsentität (111) einerseits und der Benutzerausrüstung (20) andererseits stattfinden,
wobei das Verfahren, um die Basisstationsentität (111) mit der Benutzerausrüstung (20) zu betreiben, die folgenden Schritte umfasst:
- in einem ersten Schritt sendet die Benutzerausrüstung (20) einen Disponierungsanforderungshinweis (220) an die Basisstationsentität (111),
- in einem zweiten Schritt sendet die Basisstationsentität (111) eine Steuerungssignalisierung (220') an die Benutzerausrüstung (20), wobei das Senden der Steuerungssignalisierung (220') dazu führt, dass die Basisstationsentität (111) und die Benutzerausrüstung (20) dazu eingerichtet werden, ein weiteres diskontinuierliches Sende-Empfangs-Muster (400) des verbundenen Modus anzuwenden oder zu verwenden, wobei, gemäß dem weiteren diskontinuierlichen Sende-Empfangs-Muster (400) des verbundenen Modus, neben den wiederholt auftretenden aktiven Zeitintervallen (310), wiederholt auftretende zusätzliche aktive Zeitintervalle (420) für das Datensenden und/oder das Datenempfangen in Uplink- und/oder in Downlinkrichtung zwischen der Basisstationsentität (111) einerseits und der Benutzerausrüstung (20) andererseits definiert und verwendet werden.

2. Verfahren nach Anspruch 1**,** wobei das Datensenden und/oder das Datenempfangen, insbesondere das Datensenden und/oder das Datenempfangen auf Benutzerebene, in Uplink- und/oder in Downlinkrichtung und zwischen der Basisstationsentität (111) und der Benutzerausrüstung (20), stattfinden:
- beim Anwenden des diskontinuierlichen Sende-Empfangs-Musters (300) des verbundenen Modus nur während der aktiven Zeitintervalle (310) und
- beim Anwenden des weiteren diskontinuierlichen Sende-Empfangs-Musters (400) des verbundenen Modus nur während entweder der aktiven Zeitintervalle (310) oder der zusätzlichen aktiven Zeitintervalle (420),
wobei insbesondere das weitere diskontinuierliche Sende-Empfangs-Muster (400) des verbundenen Modus mittels sowohl der aktiven Zeitintervalle (310) als auch der zusätzlichen aktiven Zeitintervalle (420) definiert wird,
wobei insbesondere die aktiven Zeitintervalle, während das diskontinuierliche Sende-Empfangs-Muster (300) des verbundenen Modus angewendet wird, einer echten Teilmenge der aktiven Zeitintervalle entsprechen, während das weitere diskontinuierliche Sende-Empfangs-Muster (400) des verbundenen Modus angewendet wird.

3. Verfahren nach einem der vorangehenden Ansprüche, wobei das weitere diskontinuierliche Sende-Empfangs-Muster (400) des verbundenen Modus verwendet wird, um der Benutzerausrüstung (20) einen oder mehrere sprachzentrierte Kommunikationsdienste zu bereitzustellen,
wobei insbesondere, in einem dritten Schritt, im Anschluss an den zweiten Schritt und nach Beendigung des einen oder der mehreren sprachzentrierten Kommunikationsdienste, die Benutzerausrüstung (20) die Verwendung des weiteren diskontinuierlichen Sende-Empfangs-Musters (400) des verbundenen Modus beendet und wieder das diskontinuierliche Sende-Empfangs-Muster (300) des verbundenen Modus verwendet oder anwendet,
wobei insbesondere dieser Übergang zum Verwenden oder Anwenden des diskontinuierlichen Sende-Empfangs-Musters (300) des verbundenen Modus eine weitere Steuerungssignalisierung umfasst, die durch die Basisstationsentität (111) an die Benutzerausrüstung (20) gesendet wird, oder dieser Übergang implizit, ohne weitere Steuerungssignalisierung, durch die Benutzerausrüstung (20) nach Beendigung des sprachzentrierten Kommunikationsdienstes angewendet wird.

4. Verfahren nach einem der vorangehenden Ansprüche, wobei die an die Benutzerausrüstung (20) gesendete Steuerungssignalisierung (220') die Definition des weiteren diskontinuierlichen Sende-Empfangs-Musters (400) des verbundenen Modus umfasst, wobei insbesondere, mittels der Steuerungssignalisierung, die zuvor angewendete Einrichtung bezüglich der Anwendung des diskontinuierlichen Sende-Empfangs-Musters (300) des verbundenen Modus überschrieben oder gelöscht wird.

5. Verfahren nach einem der vorangehenden Ansprüche, wobei die Benutzerausrüstung (20) - während sie mit der Basisstationsentität (111) verbunden ist oder durch diese bedient wird - so eingerichtet ist, dass sie Einrichtungsinformationen bezüglich sowohl des diskontinuierlichen Sende-Empfangs-Musters (300) des verbundenen Modus als auch des weiteren diskontinuierlichen Sende-Empfangs-Musters (400) des verbundenen Modus umfasst, wobei die Benutzerausrüstung (20) in der Lage ist, alternativ entweder in einem ersten Betriebsmodus oder in einem zweiten Betriebsmodus betrieben zu werden, wobei, in dem ersten Betriebsmodus, die Benutzerausrüstung (20) das diskontinuierliche Sende-Empfangs-Muster (300) des verbundenen Modus anwendet oder verwendet und wobei, in dem zweiten Betriebsmodus, die Benutzerausrüstung (20) das weitere diskontinuierliche Sende-Empfangs-Muster (400) des verbundenen Modus anwendet oder verwendet, wobei die Steuerungssignalisierung (220'), die an die Benutzerausrüstung (20) gesendet wird, die Information umfasst, den zweiten Betriebsmodus anstelle des ersten Betriebsmodus anzuwenden oder zu verwenden.

6. Verfahren nach einem der vorangehenden Ansprüche, wobei - neben der Benutzerausrüstung (20) - mindestens eine weitere Benutzerausrüstung (21) mit der Basisstationsentität (111) verbunden ist oder durch diese bedient wird,
wobei für den Fall, dass sich beide Benutzerausrüstungen (20, 21) im verbundenen Modus befinden, beide Benutzerausrüstungen (20, 21) dazu eingerichtet werden, das diskontinuierliche Sende-Empfangs-Muster (300) des verbundenen Modus anzuwenden oder zu verwenden, wobei, nachdem die Basisstationsentität (111) die Steuerungssignalisierung (220') an die Benutzerausrüstung (20) in Reaktion auf den Disponierungsanforderungshinweis (220) gesendet hat, die weitere Benutzerausrüstung (21) weiterhin das diskontinuierliche Sende-Empfangs-Muster (300) des verbundenen Modus anwendet, wobei insbesondere keine Steuerungssignalisierung an die weitere Benutzerausrüstung (21) gesendet werden muss.

7. Verfahren nach einem der vorangehenden Ansprüche, wobei sowohl die Basisstationsentität (111) als auch die Benutzerausrüstung (20) dazu eingerichtet werden, ein zweites weiteres diskontinuierliches Sende-Empfangs-Muster des verbundenen Modus anzuwenden oder zu verwenden, wobei gemäß dem zweiten weiteren diskontinuierlichen Sende-Empfangs-Muster des verbundenen Modus wiederholt auftretende weitere zusätzliche aktive Zeitintervalle - zusätzlich zu den aktiven Zeitintervallen (310) - so definiert werden, dass ein Datensenden und/oder ein Datenempfangen, in Uplink- und/oder in Downlink-Richtung und zwischen der Basisstationsentität (111) einerseits und der Benutzerausrüstung (20) andererseits, während entweder der aktiven Zeitintervalle (310) oder der weiteren zusätzlichen aktiven Zeitintervalle stattfinden, wobei insbesondere die weiteren zusätzlichen aktiven Zeitintervalle eine echte Teilmenge der zusätzlichen aktiven Zeitintervalle (420) sind.

8. Verfahren nach einem der vorangehenden Ansprüche, wobei das diskontinuierliche Sende-Empfangs-Muster (300) des verbundenen Modus mittels Angeben mindestens eines von Folgendem definiert wird:
- einen Zeitpunkt, der den Beginn eines der aktiven Zeitintervalle (310) und eines Wiederholungszeitintervalls (301) angibt,
- die Zeitpunkte, die jeweils den Beginn der aktiven Zeitintervalle (310) angeben,
und/oder
wobei das weitere diskontinuierliche Sende-Empfangs-Muster (400) des verbundenen Modus mittels Angeben mindestens eines von Folgendem definiert wird:
- einen Zeitpunkt, der den Beginn eines der aktiven Zeitintervalle (310) oder eines der zusätzlichen aktiven Zeitintervalle (420) und eines weiteren Wiederholungszeitintervalls (401) angibt,
- die Zeitpunkte, die den Beginn der aktiven Zeitintervalle (310) bzw der zusätzlichen aktiven Zeitintervalle (420) angeben,
wobei insbesondere der oder die Zeitpunkte, die den Beginn eines oder mehrerer der aktiven Zeitintervalle (310) oder der zusätzlichen aktiven Zeitintervalle (420) angeben, unter Verwendung eines Versatzzeitintervalls definiert werden, wobei das Versatzzeitintervall in Bezug auf einen Zeitpunkt oder in Bezug auf mehrere Zeitpunkte definiert wird, die der Systemframenummer entsprechen, die gleich null oder einem Versatz zu null sind.

9. Benutzerausrüstung (20) für das Betreiben mit einem Funkzugangsnetz (110) eines Mobilkommunikationsnetzes (100), wobei die Benutzerausrüstung (20) dazu eingerichtet ist, sich mit mindestens einer Basisstationsentität (111) als Teil des Funkzugangsnetzes (110) zu verbinden oder durch diese bedient zu werden,
wobei für den Fall, dass sich die Benutzerausrüstung (20) im verbundenen Modus befindet, die Benutzerausrüstung (20) dazu eingerichtet ist, ein diskontinuierliches Sende-Empfangs-Muster (300) des verbundenen Modus anzuwenden oder zu verwenden,
wobei die Benutzerausrüstung (20) so eingerichtet ist, dass, gemäß dem diskontinuierlichen Sende-Empfangs-Muster (300) des verbundenen Modus, wiederholt auftretende aktive Zeitintervalle (310) so definiert sind, dass ein Datensenden und/oder ein Datenempfangen in Uplink- und/oder in Downlinkrichtung und zwischen der Basisstationsentität (111) einerseits und der Benutzerausrüstung (20) andererseits stattfinden,
wobei, um mit der Basisstationsentität (111) betrieben zu werden, die Benutzerausrüstung (20) so eingerichtet ist, dass:
- die Benutzerausrüstung (20) einen Disponierungsanforderungshinweis (220) an die Basisstationsentität (111) sendet,
- die Benutzerausrüstung (20) von der Basisstationsentität (111) eine Steuerungssignalisierung (220') empfängt, wobei das Empfangen der Steuerungssignalisierung (220') dazu führt, dass die Benutzerausrüstung (20) dazu eingerichtet ist, ein weiteres diskontinuierliches Sende-Empfangs-Muster (400) des verbundenen Modus anzuwenden oder zu verwenden, wobei, gemäß dem weiteren diskontinuierlichen Sende-Empfangs-Muster (400) des verbundenen Modus, neben den wiederholt auftretenden aktiven Zeitintervallen (310), wiederholt auftretende zusätzliche aktive Zeitintervalle (420) für das Datensenden und/oder das Datenempfangen in Uplink- und/oder in Downlinkrichtung zwischen der Basisstationsentität (111) einerseits und der Benutzerausrüstung (20) andererseits definiert und verwendet werden.

10. Basisstationsentität (111) für das Betreiben als Teil eines Funkzugangsnetzes (110) eines Mobilkommunikationsnetzes (100) und mit mindestens einer Benutzerausrüstung (20), wobei die Benutzerausrüstung (20) mit der Basisstationsentität (111) verbunden ist oder durch diese bedient wird,
wobei für den Fall, dass sich die Benutzerausrüstung (20) im verbundenen Modus befindet, sowohl die Basisstationsentität (111) als auch die Benutzerausrüstung (20) dazu eingerichtet sind, ein diskontinuierliches Sende-Empfangs-Muster (300) des verbundenen Modus anzuwenden oder zu verwenden,
wobei die Basisstationsentität (111) so eingerichtet ist, dass, gemäß dem diskontinuierlichen Sende-Empfangs-Muster (300) des verbundenen Modus, wiederholt auftretende aktive Zeitintervalle (310) so definiert sind, dass ein Datensenden und/oder ein Datenempfangen in Uplink- und/oder in Downlinkrichtung und zwischen der Basisstationsentität (111) einerseits und der Benutzerausrüstung (20) andererseits stattfinden,
wobei, um die Basisstationsentität (111) mit der Benutzerausrüstung (20) zu betreiben, die Basisstationsentität (111) so eingerichtet ist, dass:
- die Basisstationsentität (111) einen Disponierungsanforderungshinweis (220) von der Benutzerausrüstung (20) empfängt,
- die Basisstationsentität (111) eine Steuerungssignalisierung (220') an die Benutzerausrüstung (20) sendet, wobei das Senden der Steuerungssignalisierung (220') dazu führt, dass die Basisstationsentität (111) und die Benutzerausrüstung (20) dazu eingerichtet sind, ein weiteres diskontinuierliches Sende-Empfangs-Muster (400) des verbundenen Modus anzuwenden oder zu verwenden, wobei, gemäß dem weiteren diskontinuierlichen Sende-Empfangs-Muster (400) des verbundenen Modus, neben den wiederholt auftretenden aktiven Zeitintervallen (310), wiederholt auftretende zusätzliche aktive Zeitintervalle (420) für das Datensenden und/oder das Datenempfangen in Uplink- und/oder in Downlinkrichtung zwischen der Basisstationsentität (111) einerseits und der Benutzerausrüstung (20) andererseits definiert und verwendet werden.

11. System oder Mobilkommunikationsnetz (100) zum Betreiben eines Funkzugangsnetzes (110) des Mobilkommunikationsnetzes (100) mit mindestens einer Benutzerausrüstung (20), wobei das Funkzugangsnetz (110) mindestens eine Basisstationsentität (111) umfasst und die mindestens eine Benutzerausrüstung (20) mit der mindestens einen Basisstationsentität (111) verbunden ist oder durch diese bedient wird,
wobei für den Fall, dass sich die Benutzerausrüstung (20) im verbundenen Modus befindet, sowohl die Basisstationsentität (111) als auch die Benutzerausrüstung (20) dazu eingerichtet sind, ein diskontinuierliches Sende-Empfangs-Muster (300) des verbundenen Modus anzuwenden oder zu verwenden,
wobei, gemäß dem diskontinuierlichen Sende-Empfangs-Muster (300) des verbundenen Modus, wiederholt auftretende aktive Zeitintervalle (310) so definiert sind, dass ein Datensenden und/oder ein Datenempfangen in Uplink- und/oder in Downlinkrichtung und zwischen der Basisstationsentität (111) einerseits und der Benutzerausrüstung (20) andererseits stattfinden,
wobei, um die Basisstationsentität (111) mit der Benutzerausrüstung (20) zu betreiben, das System oder das Mobilkommunikationsnetz (100) so eingerichtet ist, dass:
- die Benutzerausrüstung (20) einen Disponierungsanforderungshinweis (220) an die Basisstationsentität (111) sendet,
- die Basisstationsentität (111) eine Steuerungssignalisierung (220') an die Benutzerausrüstung (20) sendet, wobei das Senden der Steuerungssignalisierung (220') dazu führt, dass die Basisstationsentität (111) und die Benutzerausrüstung (20) dazu eingerichtet sind, ein weiteres diskontinuierliches Sende-Empfangs-Muster (400) des verbundenen Modus anzuwenden oder zu verwenden, wobei, gemäß dem weiteren diskontinuierlichen Sende-Empfangs-Muster (400) des verbundenen Modus, neben den wiederholt auftretenden aktiven Zeitintervallen (310), wiederholt auftretende zusätzliche aktive Zeitintervalle (420) für das Datensenden und/oder das Datenempfangen in Uplink- und/oder in Downlinkrichtung zwischen der Basisstationsentität (111) einerseits und der Benutzerausrüstung (20) andererseits definiert und verwendet werden.

12. Programm, umfassend einen computerlesbaren Programmcode, der, wenn er auf einem Computer oder in einer Benutzerausrüstung (20) oder in einer Basisstationsentität (111) oder teilweise in der Benutzerausrüstung (20) und/oder teilweise in der Basisstationsentität (111) ausgeführt wird, den Computer oder die Benutzerausrüstung (20) oder die Basisstationsentität (111) veranlasst, ein Verfahren nach einem der Ansprüche 1 bis 8 durchzuführen.

13. Computerlesbares Medium, umfassend Instruktionen, die, wenn sie auf einem Computer oder in einer Benutzerausrüstung (20) oder in einer Basisstationsentität (111) oder teilweise in der Benutzerausrüstung (20) und/oder teilweise in der Basisstationsentität (111) ausgeführt werden, den Computer oder die Benutzerausrüstung (20) oder die Basisstationsentität (111) veranlassen, ein Verfahren nach einem der Ansprüche 1 bis 8 durchzuführen.

## Revendications

1. Procédé de fonctionnement d'un réseau d'accès radio (110) d'un réseau de communication mobile (100) avec au moins un équipement utilisateur (20), le réseau d'accès radio (110) comprenant au moins une entité station de base (111) et au moins un équipement utilisateur (20) étant connecté à ladite au moins une entité station de base (111) ou desservi par elle,
dans lequel, dans le cas où l'équipement utilisateur (20) est en mode connecté, l'entité station de base (111) et l'équipement utilisateur (20) sont tous deux configurés pour appliquer ou utiliser un schéma d'émission-réception discontinu en mode connecté (300),
dans lequel, selon le schéma d'émission-réception discontinu en mode connecté (300), des intervalles de temps actifs (310) se produisant de manière répétée sont définis de manière à ce qu'une émission et/ou une réception de données se produise, dans la direction de la liaison montante et/ou de la liaison descendante, entre l'entité station de base (111) d'une part et l'équipement utilisateur (20) d'autre part,
dans lequel, afin de faire fonctionner l'entité station de base (111) avec l'équipement utilisateur (20), le procédé comprend les étapes suivantes :
- dans une première étape, l'équipement utilisateur (20) émet une indication de demande de programmation (220) vers l'entité station de base (111),
- dans une deuxième étape, l'entité station de base (111) émet une signalisation de commande (220') vers l'équipement utilisateur (20), l'émission de la signalisation de commande (220') ayant pour résultat que l'entité station de base (111) et l'équipement utilisateur (20) sont configurés pour appliquer ou utiliser un autre schéma d'émission-réception discontinu en mode connecté (400), dans lequel, selon l'autre schéma d'émission-réception discontinu en mode connecté (400), outre les intervalles de temps actifs (310) se produisant de manière répétée, des intervalles de temps actifs supplémentaires (420) se produisant de manière répétée sont définis et utilisés pour l'émission et/ou la réception de données, dans la direction de la liaison montante et/ou de la liaison descendante, entre l'entité station de base (111) d'une part et l'équipement utilisateur (20) d'autre part.

2. Procédé selon la revendication 1**,** dans lequel l'émission et/ou la réception de données, en particulier l'émission et/ou la réception de données de plan utilisateur, dans la direction de la liaison montante et/ou de la liaison descendante et entre l'entité station de base (111) et l'équipement de l'utilisateur (20), se produit
- lors de l'application du schéma d'émission-réception discontinu en mode connecté (300) uniquement pendant les intervalles de temps actifs (310) et
- lors de l'application de l'autre schéma d'émission-réception discontinu en mode connecté (400) uniquement pendant les intervalles de temps actifs (310) ou les intervalles de temps actifs supplémentaires (420),
dans lequel, en particulier, l'autre schéma d'émission-réception discontinu en mode connecté (400) est défini au moyen des intervalles de temps actifs (310) et des intervalles de temps actifs supplémentaires (420),
dans lequel, en particulier, les intervalles de temps actifs, alors que le schéma d'émission-réception discontinu en mode connecté (300) est appliqué, correspondent à un sous-ensemble approprié des intervalles de temps actifs alors que le schéma d'émission-réception discontinu en mode connecté (400) est appliqué.

3. Procédé selon l'une des revendications précédentes, dans lequel l'autre schéma d'émission-réception discontinu en mode connecté (400) est utilisé pour fournir à l'équipement utilisateur (20) un ou plusieurs services de communication centrés sur la voix,
dans lequel, en particulier, dans une troisième étape suivant la deuxième étape et après la fin desdits un ou plusieurs services de communication centrés sur la voix, l'équipement utilisateur (20) cesse d'utiliser l'autre schéma d'émission-réception discontinu en mode connecté (400) et utilise ou applique à nouveau le schéma d'émission-réception discontinu en mode connecté (300),
dans lequel, en particulier, cette transition vers l'utilisation ou l'application du schéma d'émission-réception discontinu en mode connecté (300) implique une autre signalisation de commande émise, par l'entité station de base (111), vers l'équipement utilisateur (20), ou cette transition est appliquée implicitement, sans autre signalisation de commande, par l'équipement utilisateur (20) après la fin du service de communication centré sur la voix.

4. Procédé selon l'une des revendications précédentes, dans lequel la signalisation de commande (220'), émise vers l'équipement utilisateur (20), comprend la définition de l'autre schéma d'émission-réception discontinu en mode connecté (400),
dans lequel, en particulier, au moyen de la signalisation de commande, la configuration précédemment appliquée concernant l'application du schéma d'émission-réception discontinu en mode connecté (300) est écrasée ou supprimée.

5. Procédé selon l'une des revendications précédentes, dans lequel l'équipement utilisateur (20) - alors qu'il est connecté à l'entité station de base (111) ou desservi par elle - est configuré de manière à comprendre des informations de configuration concernant à la fois le schéma d'émission-réception discontinu en mode connecté (300) et l'autre schéma d'émission-réception discontinu en mode connecté (400),
dans lequel l'équipement utilisateur (20) peut fonctionner alternativement dans un premier mode de fonctionnement ou dans un second mode de fonctionnement,
dans lequel, dans le premier mode de fonctionnement, l'équipement utilisateur (20) applique ou utilise le schéma d'émission-réception discontinu en mode connecté (300) et dans lequel, dans le second mode de fonctionnement, l'équipement utilisateur (20) applique ou utilise l'autre schéma d'émission-réception discontinu en mode connecté (400), dans lequel la signalisation de commande (220'), émise vers l'équipement utilisateur (20) comprend les informations pour appliquer ou utiliser le second mode de fonctionnement plutôt que le premier mode de fonctionnement.

6. Procédé selon l'une des revendications précédentes, dans lequel - outre l'équipement utilisateur (20) - au moins un autre équipement utilisateur (21) est connecté à l'entité station de base (111) ou desservi par elle,
dans lequel, dans le cas où les deux équipements utilisateur (20, 21) sont en mode connecté, les deux équipements utilisateur (20, 21) sont configurés pour appliquer ou utiliser le schéma d'émission-réception discontinu en mode connecté (300),
dans lequel, après que l'entité station de base (111) a émis la signalisation de commande (220') vers l'équipement utilisateur (20) en réponse à l'indication de demande de programmation (220), l'autre équipement utilisateur (21) continue d'appliquer le schéma d'émission-réception discontinu en mode connecté (300), et dans lequel, en particulier, il n'est pas nécessaire d'émettre une signalisation de commande vers l'autre équipement utilisateur (21).

7. Procédé selon l'une des revendications précédentes, dans lequel l'entité station de base (111) et l'équipement utilisateur (20) sont tous deux configurés pour appliquer ou utiliser un deuxième autre schéma d'émission-réception discontinu en mode connecté, dans lequel, selon le deuxième autre schéma d'émission-réception discontinu en mode connecté, d'autres intervalles de temps actifs supplémentaires se produisant de manière répétée sont définis - en plus des intervalles de temps actifs (310) - de manière à ce que l'émission et/ou la réception de données se produise, dans la direction de la liaison montante et/ou de la liaison descendante, entre l'entité station de base (111) d'une part et l'équipement utilisateur (20) d'autre part, pendant les intervalles de temps actifs (310) ou les autres intervalles de temps actifs supplémentaires,
dans lequel, en particulier, les autres intervalles de temps actifs supplémentaires sont un sous-ensemble approprié des intervalles de temps actifs supplémentaires (420) .

8. Procédé selon l'une des revendications précédentes, dans lequel le schéma **d'émission-réception** discontinu en mode connecté (300) est défini par l'indication d'au moins l'un des éléments suivants :
- un point dans le temps indiquant le début d'un des intervalles de temps actifs (310) et d'un intervalle de temps de répétition (301),
- les points dans le temps indiquant le début des intervalles de temps actifs (310), respectivement, et/ou
dans lequel l'autre schéma d'émission-réception discontinu en mode connecté (400) est défini par l'indication d'au moins l'un des éléments suivants :
- un point dans le temps indiquant le début d'un des intervalles de temps actifs (310) ou d'un des intervalles de temps actifs supplémentaires (420) et d'un autre intervalle de temps de répétition (401),
- les points dans le temps indiquant le début des intervalles de temps actifs (310), respectivement, et des intervalles de temps actifs supplémentaires (420), respectivement,
dans lequel, en particulier, le point ou les points dans le temps indiquant le début d'un ou de plusieurs des intervalles de temps actifs (310) ou des intervalles de temps actifs supplémentaires (420) est/sont défini(s) à l'aide d'un intervalle de temps de décalage, dans lequel l'intervalle de temps de décalage est défini par rapport à un point dans le temps ou par rapport à plusieurs points dans le temps correspondant à un numéro de trame du système égal à zéro ou à un décalage par rapport à zéro.

9. Équipement utilisateur (20) destiné à fonctionner avec un réseau d'accès radio (110) d'un réseau de communication mobile (100), dans lequel l'équipement utilisateur (20) est configuré pour se connecter à au moins une entité station de base (111) faisant partie du réseau d'accès radio (110) ou pour être desservi par elle,
dans lequel, dans le cas où l'équipement utilisateur (20) est en mode connecté, l'équipement utilisateur (20) est configuré pour appliquer ou utiliser un schéma d'émission-réception discontinu en mode connecté (300),
dans lequel l'équipement utilisateur (20) est configuré de telle sorte que, selon le schéma d'émission-réception discontinu en mode connecté (300), des intervalles de temps actifs (310) se produisant de manière répétée sont définis de manière à ce qu'une émission et/ou une réception de données se produise, dans la direction de la liaison montante et/ou de la liaison descendante, entre l'entité station de base (111) d'une part et l'équipement utilisateur (20) d'autre part,
dans lequel, afin de fonctionner avec l'entité station de base (111), l'équipement utilisateur (20) est configuré de telle sorte que :
- l'équipement utilisateur (20) émet une indication de demande de programmation (220) vers l'entité station de base (111),
- l'équipement utilisateur (20) reçoit, de l'entité station de base (111), une signalisation de commande (220'), la réception de la signalisation de commande (220') ayant pour résultat que l'équipement utilisateur (20) est configuré pour appliquer ou utiliser un autre schéma d'émission-réception discontinu en mode connecté (400), dans lequel, selon l'autre schéma d'émission-réception discontinu en mode connecté (400), outre les intervalles de temps actifs (310) se produisant de manière répétée, des intervalles de temps actifs supplémentaires (420) se produisant de manière répétée sont définis et utilisés pour l'émission et/ou la réception de données, dans la direction de la liaison montante et/ou de la liaison descendante, entre l'entité station de base (111) d'une part et l'équipement utilisateur (20) d'autre part.

10. Entité station de base (111) destinée à fonctionner en tant que partie d'un réseau d'accès radio (110) d'un réseau de communication mobile (100) et avec au moins un équipement utilisateur (20), l'équipement utilisateur (20) étant connecté à l'entité station de base (111) ou desservi par elle,
dans lequel, dans le cas où l'équipement utilisateur (20) est en mode connecté, l'entité station de base (111) et l'équipement utilisateur (20) sont tous deux configurés pour appliquer ou utiliser un schéma d'émission-réception discontinu en mode connecté (300),
dans lequel l'entité station de base (111) est configurée de telle sorte que, selon le schéma d'émission-réception discontinu en mode connecté (300), des intervalles de temps actifs (310) se produisant de manière répétée sont définis de manière à ce qu'une émission et/ou une réception de données se produise, dans la direction de la liaison montante et/ou de la liaison descendante, entre l'entité station de base (111) d'une part et l'équipement utilisateur (20) d'autre part,
dans lequel, afin de faire fonctionner l'entité station de base (111) avec l'équipement utilisateur (20), l'entité station de base (111) est configurée de telle sorte que :
- l'entité station de base (111) reçoit une indication de demande de programmation (220) de l'équipement utilisateur (20),
- l'entité station de base (111) émet une signalisation de commande (220') vers l'équipement utilisateur (20), l'émission de la signalisation de commande (220') ayant pour résultat que l'entité station de base (111) et l'équipement utilisateur (20) sont configurés pour appliquer ou utiliser un autre schéma d'émission-réception discontinu en mode connecté (400), dans lequel, selon l'autre schéma d'émission-réception discontinu en mode connecté (400), outre les intervalles de temps actifs (310) se produisant de manière répétée, des intervalles de temps actifs supplémentaires (420) se produisant de manière répétée sont définis et utilisés pour l'émission et/ou la réception de données, dans la direction de la liaison montante et/ou de la liaison descendante, entre l'entité station de base (111) d'une part et l'équipement utilisateur (20) d'autre part.

11. Système ou réseau de communication mobile (100) pour faire fonctionner un réseau d'accès radio (110) du réseau de communication mobile (100) avec au moins un équipement utilisateur (20), le réseau d'accès radio (110) comprenant au moins une entité station de base (111) et ledit au moins un équipement utilisateur (20) étant connecté à l'entité station de base (111) ou desservi par elle,
dans lequel, dans le cas où l'équipement utilisateur (20) est en mode connecté, l'entité station de base (111) et l'équipement utilisateur (20) sont tous deux configurés pour appliquer ou utiliser un schéma d'émission-réception discontinu en mode connecté (300),
dans lequel, selon le schéma d'émission-réception discontinu en mode connecté (300), des intervalles de temps actifs (310) se produisant de manière répétée sont définis de manière à ce qu'une émission et/ou une réception de données se produise, dans la direction de la liaison montante et/ou de la liaison descendante, entre l'entité station de base (111) d'une part et l'équipement utilisateur (20) d'autre part,
dans lequel, afin de faire fonctionner l'entité station de base (111) avec l'équipement utilisateur (20), le système ou le réseau de communication mobile (100) est configuré de telle sorte que :
- l'équipement utilisateur (20) émet une indication de demande de programmation (220) vers l'entité station de base (111),
- l'entité station de base (111) émet une signalisation de commande (220') vers l'équipement utilisateur (20), l'émission de la signalisation de commande (220') ayant pour résultat que l'entité station de base (111) et l'équipement utilisateur (20) sont configurés pour appliquer ou utiliser un autre schéma d'émission-réception discontinu en mode connecté (400), dans lequel, selon l'autre schéma d'émission-réception discontinu en mode connecté (400), outre les intervalles de temps actifs (310) se produisant de manière répétée, des intervalles de temps actifs supplémentaires (420) se produisant de manière répétée sont définis et utilisés pour l'émission et/ou la réception de données, dans la direction de la liaison montante et/ou de la liaison descendante, entre l'entité station de base (111) d'une part et l'équipement utilisateur (20) d'autre part.

12. Programme comprenant un code de programme lisible par un ordinateur qui, lorsqu'il est exécuté sur un ordinateur ou sur un équipement utilisateur (20) ou sur une entité station de base (111), ou en partie sur l'équipement utilisateur (20) et/ou en partie sur l'entité station de base (111), amène l'ordinateur ou l'équipement utilisateur (20) ou l'entité station de base (111), à mettre en œuvre un procédé selon l'une des revendications 1 à 8**.**

13. Support lisible par ordinateur comprenant des instructions qui, lorsqu'elles sont exécutées sur un ordinateur ou sur un équipement utilisateur (20) ou sur une entité station de base (111), ou en partie sur l'équipement utilisateur (20) et/ou en partie sur l'entité station de base (111), amènent l'ordinateur ou l'équipement utilisateur (20) ou l'entité station de base (111) à mettre en œuvre un procédé selon l'une des revendications 1 à 8.
